# EUROPEAN PATENT SPECIFICATION

(11) **EP 0 520 239 B1**
(45) Date of publication and mention of the grant of the patent: **14.08.1996**
(21) Application number: 92109723.4
(22) Date of filing: 10.06.1992
(51) Int. Cl.: C02F 1/72, C02F 3/34

(54) **Detoxication of vegetation liquors**
Entgiftung von Vegetationswässern
Détoxication d'eaux de végétation

(30) Priority: 28.06.1991 IT MI911796
(43) Date of publication of application: 30.12.1992
(73) Proprietor: AUSIMONT S.p.A., I-20100 Milano (IT)
(72) Inventor: Burzio, Fulvio, I-20145 Milan (IT); Wlassics, Ivan, I-16035 Rapallo, Genova (IT)
(74) Representative: Zumstein, Fritz, Dr.

(56) References cited:
- EP-A- 0 238 148
- FR-A- 1 526 020
- GB-A- 2 070 580
- CHEMICAL ABSTRACTS, vol. 107, no. 10, 7 September 1987, Columbus, Ohio, US;abstract no. 83248p, AMAT DI SAN FILIPPO, PAOLO ET AL. 'Vegetable material inwater in the olive oil industry: raw material or polluting waste?' page 341
- WASTE MANAGEMENT vol. 11, no. 03, 1991, NEW YORK US pages 125 - 133 T. PICCINNOET AL. 'Wet oxidation by hydrogen peroxide for the treatment of mixedradioactive and toxic organic wastes and waste waters'

## Description

The present invention relates to a process for detoxicating vegetation liquors of olives.

More particularly, the present invention relates to a process for detoxicating the vegetation liquors (VL) of olives, in order to be able to use again said vegetation liquors in the agricultural field, as fertilizers and as irrigation waters.

The vegetation liquors (VL) are that water-based byproduct which results from the extraction of olive-juice with hot-water, and from possible washing of oil mills.

The vegetation liquors contain a concentration of more than 12-15% of organic and inorganic compounds (potassium salts and phosphates).

Thanks to the presence of large amounts of proteins, polysaccharides, mineral salts and other useful substances for agriculture, such as, e.g., humic acids, the vegetation liquors have a high fertilizing power.

Therefore, the vegetation liquors might be used as a natural, low-cost manure available in large amounts.

Unfortunately, besides these useful substances for agriculture, the vegetation liquors also contain phytotoxic and biotoxic substances which prevent them from being disposed of.

In fact, the presence of such substances causes the vegetation liquors to be poorly biodegradable or non-biodegradable at all, and, consequently, unsuitable for a further use as manure, or as irrigation waters.

Should the vegetation liquors be directly discharged into fresh water or into the sea, they would destroy the self-purifying capabilities of these environments, and seriously alter their biological equilibrium, for a long time in future.

Furthermore, the poor biodegradability of said vegetation liquors inhibits a possible spreading thereof onto the fields, as a customary practice, in that the non-biodegradable organic compounds contained in them would reach the water bed and pollute it.

The use of vegetation liquors as manure, by means of their spreading onto the fields, is impossible, because the phytotoxic substances contained in them would inhibit the growth of vegetable organisms.

These characteristics are aggravated by the large volumes of vegetation liquors which are produced each year, which, for main olive-oil producer Countries, such as, e.g., Italy, are estimated to be comprised within the range of from 1 to 2 million m³; moreover, the production of these amounts takes place on a seasonal basis (3-4 month long).

Several techniques are known which, however, on an individual basis, do not allow the problem of disposal of vegetation waters to be solved to a complete and exhaustive extent, effectively and in an ecologically satisfactory way.

The most important processes known from the prior art for disposing of the vegetation liquors are:
(a) Lagooning (Istituto di Ricerca sulle Acque, pages 483-487)
   This technique makes it possible the vegetation liquors to be partially degraded by a natural biological route, over very long time periods. This method requires the availability of large collecting basins far from dwelling areas owing to the unpleasant smell of the vegetation liquors.
   This technique for vegetation liquors disposal imposes treatment times of the order of 7-8 months; in practice, from one expression season to the subsequent season, and the end result is a material suitable for use as manure. Therefore, on considering the large volumes of vegetation liquors produced each year, and the necessary time for the disposal thereof, this solution is affected by the drawback that large, adequate surface areas have to be available for long time periods; and, furthermore, it renders large land surface areas useless for active agriculture. The end product is useless for use as manure, or for irrigation uses.
(b) Incineration (Istituto di Ricerca sulle Acque, pages 487-494)
   This is the most radical and destructive technique, which eliminates any possibilities of further uses of the vegetation liquors. Furthermore, the combustion processes cause environmental problems, arising from the emission of toxic substances in gas form, require high energy consumptions, very expensive facilities, as well as further energy wastes, caused by the transport of the vegetation liquors to the incinerating facilities.
(c) Treatment in activated-sludge biological facilities (Industrie Alimentari, May 1983, pages 353-356).
   The vegetable liquors containing large amounts of organic substances and non-biodegradable substances, cannot be treated on biological plants. However, a biological degradation of the vegetation liquors by the activated sludges could be provided, if said vegetation liquors are previously and suitably diluted with easily-biodegradable waste waters, such as, e.g., municipal sewage. After such a dilution, the biotoxic substances contained -- by now, in low concentrations -- in the vegetation liquors are no longer capable of deactivating the bacterial flora which controls the biodegradation process. However, the necessary value of the ratio of vegetation liquors/biodegradable substances is very small, owing to vegetation liquors biotoxicity. Therefore, the use of this technique to dispose of the vegetation liquors requires a large number of low-capacity biological treatment facilities, sited in areas with low dwelling density. Unfortunately, in these areas the production of municipal sewage is small, and consequently insufficient in order to feed said facilities.
   Therefore, this solution is an only partial one, and constrained to particularly favourable local situations. However, in this case too, the vegetation waters must be transported -- consequently, with additional costs -- to their treatment facilities.
(d) Evaporation of water and use of the residues in fodder industry [La Rivista delle Sostanze Grasse, vol. 65, 2, pages 117-124 (1988)]
   Also with this technique, the above cited problems arise, such as, e.g., the energy consumption required by the evaporation process and the transport of the vegetation liquors to their treatment sites. Furthermore, as to the nutritional acceptability of the vegetation liquors, negative opinions exist which are due to the presence of anti-digestive active principles.
(e) Recovery of the organic components [Acqua-Aria 5, pages 579-588 (1988)]
   Several techniques exist, which make it possible some potentially valuable organic compounds contained in the vegetation liquors to be extracted, and/or all the organic portion of the vegetation liquors to be concentrated {alternative process to the evaporation of water [process (d)]}.
   These techniques use specific solvents and ultrafiltration/reverse osmosis techniques, which require the application of sophisticated technologies, which, in their turn, require that complex and expensive chemical facilities are available.
   In the case of a total recovery of the organic mass, the problems remain hence unsolved, of the disposal thereof, which, if oriented to a re-use of said residues as manure or for irrigation purposes, shows the same difficulties as shown by the original vegetation liquors, in that the biotoxic and phytotoxic principles were only concentrated, not eliminated.
(f) Separation of the organic components by precipitation [La Rivista Italiana delle Sostanze Grasse, Vol. 67, 3, pages 131-137 (1990)]
   This technique makes it possible the organic substances to be separated from the vegetation liquors using, e.g., lime, iron salts, and so forth. However, the results are only partial, not quantitative, because the separated fraction is only a fraction of the initial content. Furthermore, another disadvantage of this technique is that the precipitated material has then to be disposed of.
(g) Destruction of the organic substances by chemical and/or electrochemical oxidation [La Rivista italiana delle Sostanze Grasse, Vol. 67, 3, pages 131-137)]
   According to this technique, the high-temperature oxidation with sodium persulfate (Na₂S₂O₈) and/or the electro-oxidation in the presence of sodium chloride are used. With both solutions, the oxidations of the phytotoxic and biotoxic compounds are only partial and require a high energy consumption. Furthermore, complex managament problems have to be solved. The end product is unsuitable for use for watering purposes, and in agriculture, as manure.
(h) Vegetable material in water in the olive oil industry: raw material or polluting waste? [Rivista Merceologica 1986, 25 (III), pages 183 - 199].
   This technique has the aim to metabolise all the COD (Chemical Oxygen Demand) of the vegetation liquors by using Saccharomyces cerevisiae strains, in order to produce a biomass. The treated vegetation liquors are not suitable for re-using in agriculture as a liquid manure.
   Piccinno et al in "Waste Management", vol. 11, no. 03, 1991, pages 125-133, disclose a process for removing toxic and non-biodegradable organic compounds from waste waters by wet oxidation with hydrogen peroxide and catalysts. Particularly the disposal of olive vegetation waters is carried out at 100°C with 36% H₂O₂ as oxidant and an iron salt as catalyst.

EP-A-238 148 describes a process for the anaerobic purification of waste waters containing both phenolic compounds and degradable non-phenolic compounds, which comprises subjecting the waste waters, prior to the anaerobic purification, to an oxidative treatment to reduce or eliminate the methanogenic toxicity of the phenolic compounds.

Therefore, the purpose of the present invention is of overcoming the disadvantages which affect the above reported techniques, known from the prior art, and providing a process for selectively eliminating the biotoxic and phytotoxic principles which hinder the disposal of the vegetation liquors of olives, without altering, to any meaningful extent, the other organic substances, which can be used again in the agricultural field, as manure, or for watering purposes.

The present Applicant has surprisingly found now, that the vegetation liquors of olives can be deprived of their toxicity by using a process according to which said vegetation liquors are treated with hydrogen peroxide in association with peroxidase. The vegetation liquors deprived of their toxicant components can be then used as manure, or for irrigation purposes.

The above stated purpose is achieved, according to the present invention, by means of a process for detoxicating vegetation liquors, characterized in that said process is carried out by treating the vegetation liquors with hydrogen peroxide in association with peroxidase.

Hydrogen peroxide is added as a diluted aqueous solution.

The treatment of the vegetation liquors is carried out by using hydrogen peroxide in an amount -- expressed as 100%-hydrogen peroxide -- comprised within the range of from 0.1 to 100 g/litre of vegetation liquors, and preferably comprised within the range of from 3 to 40 g/litre of vegetation liquors.

The peroxidase is used in concentrated form, as extracts from the living beings -- prevailingly vegetable species --which contain them, or in diluted form, in the form of raw vegetable products. The peroxidase is used in combination with hydrogen peroxide in such a way that its amount is comprised within the range of from 0 to 100,000 U/litre of vegetation liquors, and preferably comprised within the range of from 0 to 40,000 U/litre.

In the present process, it is preferable that before the treatment of vegetation liquors with H₂O₂, the pH of the vegetation liquors is adjusted at a pH value comprised within the range of from 5.5 to 8, and preferably at 6.5 ± 0.5. For that purpose, buffering alkaline substances can be used, such as, e.g., sodium carbonate, sodium hydrogen carbonate, phosphates, sodium acetate, and so forth.

The treatment of the vegetation liquors can be carried out at all temperatures comprised within the range of from 0°C to 100°C, with temperature values comprised within the range of from 10°C to 45°C, and, in particular, room temperatures, being preferred.

After the addition of the reactants, the treatment is brought to completion by leaving the mass standing, possibly with mild stirring, for a few days.

The reaction time depends on temperature; when the reaction is carried out at room temperature, said treatment time will be longer than 3 hours, and preferably than 12 hours.

According to the preferred process, the addition of hydrogen peroxide and enzymes is carried out after the pH of the vegetation liquors being adjusted at a value comprised within the range of from 5.5 to 8, with said pH value being preferably kept at 6.5 ± 0.5; at room temperature, and with mild stirring.

The reaction conditions are maintained for a few days, in order to complete the treatment.

The use of hydrogen peroxide makes it possible a very effective detoxication of the vegetation liquors to be carried out, by means of the selective removal of biotoxic and phytotoxic principles, while the other substances, useful for agriculture, are left unchanged. The use of peroxidase in combination with hydrogen peroxide promotes the decomposition of the noxious substances into biodegradable substances. In that way, the process of the invention makes it possible the vegetation liquors to be re-used in agriculture.

The process of the present invention can possibly be associated with some techniques known from the prior art, in order to integrally exploit the biological potentialities inherently displayed by the vegetation liquors; therefore, the technique according to the present invention is essential as a preliminary treatment, in order to facilitate the disposal of the vegetation liquors and shorten to a meaningful extent the time required by the subsequent disposal, e.g., in activated-sludges biological facilities.

The process according to the present invention does not require any particular plants and/or equipment pieces. It furthermore displays the advantage that the efficiency of the process is independent from the volume of vegetation liquors to be treated, so large collection centres are not necessary.

The process according to the present invention can hence be carried out also on a local basis, on any desired volumes of liquors, with the vegetation liquors deprived of their toxic content being directly re-used at the same site, therefore also with the elimination of energy expenditure due to transport.

The process according to the present invention is cheap and environmentally compatible, because it takes place at room temperature, and with the use of reactants which do not leave environmentally toxic residues and therefore do not cause any secondary induced pollution problems.

In order to better understand the present invention, some examples of practical embodiment are reported in the following for merely illustrative, exemplifying purposes, and which in no way shall be construed as being limitative of the scope of the present invention.

### Example 1 (reference example)

A volume of 50 ml of vegetation liquors from Umbria, with a COD (chemical oxygen demand) of 23,500 mg/l and approximately 9-month old, referred to in the following as "VL₁", was charged to an Erlenmeyer flask of 100 ml of capacity, and its pH value was adjusted at pH 6.5 by means of the addition of 600 mg of sodium hydrogen carbonate.

Then, the amounts of hydrogen peroxide which are reported in Table 1 -- expressed as grams of 100%-hydrogen peroxide per litre of vegetation liquors -- were added during approximately 5 minutes, at room temperature, with mild stirring. The reaction mixture was then kept with mild stirring for 24 hours.

At the end of the treatment, 10 ml of liquid was withdrawn and 9 ml thereof was used in order to impregnate a portion of agricultural earth, previously prepared inside small polyethylene glasses, of 50 ml of capacity. Then, 10 seeds of garden rocket were buried, covered by a thin earth layer. Then, 1 ml of the above said liquid sample was spread on the surface of the latter. The so-treated seeds were allowed to stand for a 7-day period. At the end of this time period, the number and height of the seedlings was recorded.

For control purposes, tests of germination of the same number of garden rocket seeds per each test were carried out, which seeds were seeded under the same conditions, and were watered with (a) distilled water and (b) the same vegetation liquors, untreated.

The results are reported in Table 1. The germination values are expressed as the percent ratio of the number of germinated seeds to the number of buried seeds; and the height of the seedlings is expressed as mm.

The results obtained demonstrate that the treatment of the vegetation liquors VL₁ with hydrogen peroxide is capable of considerably increasing the germination percentage and the growth rate of the seedlings -- hence, of reducing, to a some extent, the phytotoxic power of the vegetation liquors.

### Example 2

By operating under the same conditions as stated in Example 1, the vegetation liquors VL₁ were treated with hydrogen peroxide and, as the enzyme, with horseradish peroxidase available from Sigma Chemical Co. (U.S.A.), in the amounts shown in Table 2, in which the added amounts of hydrogen peroxide are expressed as grams of 100%-hydrogen peroxide added per each litre of vegetation liquors, and the added amounts of enzyme are expressed as enzymatic units per each litre of vegetation liquors -- with one enzymatic unit corresponding to the amount of enzyme which, at pH 6.0 and at 25°C, converts 1 µmol of pyrogallol into purpurogallin within a 1-minute time.

By following the modalities disclosed in Example 1, the so-treated vegetation liquors VL₁ were used for garden rocket seeds germination tests, using, as control seeds, the seeds which were watered with distilled water and untreated VL₁.

The results are reported in Table 2. They demonstrate that the treatment of vegetation liquors VL₁ carried out with hydrogen peroxide in association with peroxidase enzyme, is capable of completely eliminating the phytotoxic effect of vegetation liquors, enabling the seeds watered with treated vegetation liquors, to grow with a grow rate at all similar to as shown by the seeds watered with distilled water.

### Example 3

Example 2 was repeated, with vegetation liquors VL₁ being treated with 18.3 g/l of hydrogen peroxide and 500 U/l of horseradish peroxidase and using the treated vegetation liquors for lettuce seeds germination tests, according to the conditions disclosed in Example 1. The results are reported in Table 3, and demonstrate that the detoxicating treatment is effective also on lettuce seeds.

### Example 4 (reference example)

Example 1 was repeated by replacing the vegetation liquors VL₁ with vegetation liquors also coming from Umbria, but freshly expressed -- referred to in the following as "VL₂", with a COD value of 26,250.

Furthermore, the treatment with hydrogen peroxide was extended up to 96 hours.

In Table 4, the values of germination (%) are reported, which were obtained by watering the garden rocket seeds with vegetation liquors VL₂ treated over reaction times of 24 and 96 hours respectively, with the added amounts of hydrogen peroxide which are reported in said Table 4. These results show that also in this case, the use of hydrogen peroxide alone is capable of drastically reducing the phytotoxicity of the vegetation liquors, nearly up to the levels which can be obtained when the test seeds are watered with distilled water. One may furthermore observe that longer times of treatment with hydrogen peroxide can further improve the results, making it possible the added amounts of hydrogen peroxide to be reduced.

### Example 5

Example 4 was repeated, by submitting the vegetation liquors VL₂ to the detoxicating treatment with hydrogen peroxide in combination with peroxidase enxyme of Example 2, added in the amounts displayed in table 5. The results reported in Table 5 demonstrate that the association of hydrogen peroxide and peroxidase is capable of completely eliminating the phytotoxic effect of vegetation liquors even with very small amounts of added hydrogen peroxide, as, e.g., it occurs in the test carried out with 8 g/l of hydrogen peroxide and 20,000 U of peroxidase/litre, with a 96-hour long treatment of VL₂.

### Example 6

Example 2 was repeated, with VL₂ being replaced by freshly-expressed vegetation liquors from Liguria, with a COD of 42,400 mg/l, which are referred to in the following as "VL₃".

Said vegetation liquors VL₃ were treated with the amounts of hydrogen peroxide and peroxidase as reported in Table 6, with treatment time periods of 48 and 96 hours. The germination results obtained are shown in said Table 6, and demonstrate a strong effect of the association of hydrogen peroxide and peroxidase enzyme in the reduction of phytotoxicity of VL₃. The treatment demonstrates furthermore a favourable effect which increases with increasing concentrations of peroxidase enzyme and hydrogen peroxide. Finally, a further increase in germination percentage can be observed when the reaction time is increased. Although the vegetation liquors VL₃ have a considerably higher COD value than VL₂, the combination of hydrogen peroxide and peroxidase is capable of securing a germination rate comparable to the germination rate which can be obtained with treated VL₂ (see Table 5), in spite of the small amounts of peroxidase added.

### Example 7

Example 2 was repeated by replacing the vegetation liquors VL₂ with freshly expressed vegetation liquors from Puglia, with a COD of 28,600 mg/l, referred to in the following as "VL₄". Said vegetation liquors VL₄ were treated both with hydrogen peroxide alone, and with the combination of hydrogen peroxide and peroxidase, in the amounts shown in Table 7. From the germination values reported in Table 7, one will observe that the use of hydrogen peroxide alone causes an increase in germination percentage of the order of 40-60% (relatively to the germination rate obtained with untreated VL₄), as a function of the reaction time. It can be furthermore observed that the addition of peroxidase causes a further increase, of the order of 20%, in germination rate.

### Example 8

In order to evaluate the effect of the treatment according to the present invention also on the biotoxic properties of vegetation liquors, which are the main cause of the poor, or completely absence of, biodegradability of the vegetation liquors, samples of VL₂ and of freshly expressed vegetation liquors from Puglia and having a COD of 57,200 mg/l, referred to in the following as "VL₅", were submitted to the detoxicating treatment with hydrogen peroxide and peroxidase, as set forth in Table 8, during a reaction time of 24 hours.

At the end of the detoxicating treatment, on each sample both COD and BOD₅ (biochemical oxygen demand after 5 days) were measured by means of the respirometric method in closed bottle, and the results were compared to those obtained from analogous determinations carried out on the same vegetation liquors, in their untreated state. The results are reported in Table 8. It can be observed that the corresponding BOD₅/COD ratio, which is a well-known biodegradability index, shows a considerable increase after the treatment according to the present invention. The resulting values of BOD₅/COD are even comparable to the typical values for municipal sewage (BOD₅/COD = approximately 50%), which can generally be treated in biological purification facilities -- and demonstrate that the technology proposed by the present invention converts the vegetation liquors into biodegradable waste.

**Table 1**

| Hydrogen Peroxide (g/l) | Germination (%) | Height of Seedlings (mm) |
|---|---|---|
| 0.00 | 0 | 0 |
| 0.36 | 30 | 16 |
| 36.00 | 40 | 20 |
| Distilled water | 100 | 30 |

**Table 2**

| Hydrogen Peroxide (g/l) | Peroxidase (U/l) | Germination (%) | Height of Seedlings (mm) |
|---|---|---|---|
| 0.0 | 0 | 0 | 0 |
| 1.8 | 2 000 | 10 | 10 |
| 3.6 | 2 000 | 60 | 20 |
| 18.0 | 10 000 | 80 | 26 |
| 36.0 | 20 000 | 100 | 30 |
| 36.0 | 40 000 | 100 | 30 |
| Distilled water | 0 | 100 | 30 |

**Table 3**

| Hydrogen Peroxide (g/l) | Peroxidase (U/l) | Germination Rate (%) |
|---|---|---|
| 0.0 (untreated VL) | 0 | 0 |
| 18.3 | 500 | 60 |
| Distilled water | -- | 100 |

**Table 4**

| Hydrogen Peroxide (g/l) | After 24 hours | After 96 hours |
|---|---|---|
| 5 | 10 | 10 |
| 8 | 20 | 20 |
| 18 | 60 | 90 |
| 25 | 90 | 90 |
| 36 | 90 | 90 |
| Untreated VL : 0% Germination rate Distilled water: 100% Germination rate | | |

**Table 5**

| Hydrogen Peroxide (g/l) | Peroxidase (U/l) | | | | Peroxidase (U/l) | | | |
|---|---|---|---|---|---|---|---|---|
| | 10 000 | 20 000 | 30 000 | 40 000 | 10 000 | 20 000 | 30 000 | 40 000 |
| | After 24 hours | | | | After 96 hours | | | |
| 5 | 70 | 80 | 80 | 80 | 80 | 90 | 90 | 90 |
| 8 | 70 | 80 | 80 | 80 | 90 | 100 | 100 | 100 |
| 18 | 80 | 80 | 90 | 90 | 90 | 100 | 100 | 100 |
| 25 | 90 | 90 | 90 | 100 | 100 | 100 | 100 | 100 |
| 36 | 90 | 90 | 100 | 100 | 100 | 100 | 100 | 100 |
| Untreated VL : 0% germination Distilled water: 100% germination | | | | | | | | |

**Table 6**

| Peroxidase (U/l) | After 48 hours Hydrogen Peroxide (g/l) | | After 96 hours Hydrogen Peroxide (g/l) | |
|---|---|---|---|---|
| | 5 | 8 | 5 | 8 |
| 10 000 | 60 | 60 | 70 | 80 |
| 40 000 | 70 | 70 | 70 | 80 |
| Untreated VL : 0% Germination rate Distilled water: 100% Germination rate | | | | |

**Table 7**

| Peroxidase (U/l) | After 24 hours Hydrogen Peroxide (g/l) | After 48 hours Hydrogen Peroxide (g/l) |
|---|---|---|
| | 8 | 8 |
| 0 | 70 | 80 |
| 20 000 | 80 | 90 |
| Untreated VL : 50% Germination rate Distilled water: 100% Germination rate | | |

**Table 8**

| Type of Vegetation Liquors (VL) | Hydrogen Peroxide (g/l) | Peroxidase (U/l) | COD (mg/l) | BOD₅ (mg/l) | BOD₅/COD (%) |
|---|---|---|---|---|---|
| VL₂ | 0 | 0 | 26 250 | 2 000 | 7.6 |
| VL₂ | 24 | 20 000 | 25 300 | 10 500 | 41.5 |
| VL₅ | 0 | 0 | 57 200 | 7 000 | 12.2 |
| VL₅ | 24 | 20 000 | 52 350 | 27 000 | 51.6 |

## Claims

1. Process for detoxicating vegetation liquors of olives, characterized in that said process is carried out by treating the vegetation liquors with hydrogen peroxide in association with peroxidase.

2. Process according to claim 1, characterized in that hydrogen peroxide is used in an amount comprised within the range of from 0.1 to 100 g/litre of vegetation liquors, and preferably comprised within the range of from 3 to 40 g/litre of vegetation liquors, expressed as 100%-hydrogen peroxide.

3. Process according to claim 1, characterized in that the amount of peroxidase is comprised within the range of from 0 to 100,000 U/litre of vegetation liquors, and preferably comprised within the range of from 0 to 40,000 U/litre.

4. Process according to claim 1, characterized in that, before the treatment, the pH of the vegetation liquors is adjusted at a pH value comprised within the range of from 5.5 to 8, and preferably at 6.5 ± 0.5.

5. Process according to claim 1, characterized in that the pH value is adjusted with buffering substances, selected from among sodium carbonate, sodium hydrogen carbonate, phosphates, sodium acetate.

6. Process according to claim 1, characterized in that the process is carried out at a temperature comprised within the range of from 0°C to 100°C, preferably comprised within the range of from 10°C to 45°C.

7. Process according to claim 1, characterized in that the process is carried out at room temperature.

8. Process according to claim 1, characterized in that the process is carried out with mild stirring.

## Patentansprüche

1. Verfahren zur Detoxikation von Vegetationslaugen von Oliven, dadurch gekennzeichnet, daß das Verfahren durch Behandeln der Vegetationslaugen mit Wasserstoffperoxid zusammen mit Peroxidase durchgeführt wird.

2. Verfahren gemäß Anspruch 1, dadurch gekennzeichnet, daß Wasserstoffperoxid in einer Menge innerhalb des Bereichs von 0,1 bis 100 g/Liter Vegetationslaugen und vorzugsweise innerhalb des Bereichs von 3 bis 40 g/Liter Vegetationslaugen, ausgedrückt als 100 %-Wasserstoffperoxid, verwendet wird.

3. Verfahren gemäß Anspruch 1, dadurch gekennzeichnet, daß die Menge der Peroxidase im Bereich von 0 bis 100 000 E/Liter Vegetationslaugen und vorzugsweise im Bereich von 0 bis 40 000 E/Liter liegt.

4. Verfahren gemäß Anspruch 1, dadurch gekennzeichnet, daß vor der Behandlung der pH der Vegetationslaugen auf einen pH-Wert im Bereich von 5,5 bis 8 und vorzugsweise bei 6,5 ± 0,5 eingestellt wird.

5. Verfahren gemäß Anspruch 1, dadurch gekennzeichnet, daß der pH-Wert mit Puffersubstanzen, ausgewählt unter Natriumcarbonat, Natriumhydrogencarbonat, Phosphaten und Natriumacetat, eingestellt wird.

6. Verfahren gemaß Anspruch 1, dadurch gekennzeichnet, daß das Verfahren bei einer Temperatur im Bereich von 0 bis 100 °C, vorzugsweise im Bereich von 10 bis 45 °C, durchgeführt wird.

7. Verfahren gemäß Anspruch 1, dadurch gekennzeichnet, daß das Verfahren bei Raumtemperatur durchgeführt wird.

8. Verfahren gemäß Anspruch 1, dadurch gekennzeichnet, daß das Verfahren unter leichtem Rühren durchgeführt wird.

## Revendications

1. Procédé de détoxification de liqueurs de végétation d'olives, caractérisé par le fait que ledit procédé est effectué par traitement des liqueurs de végétation par du peroxyde d'hydrogène en association avec de la peroxydase.

2. Procédé selon la revendication 1, caractérisé par le fait que le peroxyde d'hydrogène est utilisé dans une quantité comprise à l'intérieur de la plage allant de 0,1 à 100 g/litre de liqueurs de végétation, et, de préférence, comprise à l'intérieur de la plage allant de 3 à 40 g/litre de liqueurs de végétation, exprimé en tant que peroxyde d'hydrogène à 100%.

3. Procédé selon la revendication 1, caractérisé par le fait que la quantité de peroxydase est comprise à l'intérieur de la plage allant de 0 à 100 000 U/litre de liqueurs de végétation, et, de préférence, comprise à l'intérieur de la plage allant de 0 à 40 000 U/litre.

4. Procédé selon la revendication 1, caractérisé par le fait qu'avant le traitement, le pH des liqueurs de végétation est ajusté à une valeur de pH comprise à l'intérieur de la plage allant de 5,5 à 8, et, de préférence, à une valeur de 6,5 ± 0,5.

5. Procédé selon la revendication 1, caractérisé par le fait que la valeur du pH est ajustée par des substances tampons choisies parmi le carbonate de sodium, l'hydrogéno carbonate de sodium, les phosphates, l'acétate de sodium.

6. Procédé selon la revendication 1, caractérisé par le fait que le procédé est effectué à une température comprise à l'intérieur de la plage allant de 0°C à 100°C, de préférence comprise à l'intérieur de la plage allant de 10°C à 45°C.

7. Procédé selon la revendication 1, caractérisé par le fait que le procédé est effectué à la température ambiante.

8. Procédé selon la revendication 1, caractérisé par le fait que le procédé est effectué sous agitation modérée.
